# EUROPÄISCHE PATENTSCHRIFT

(11) **EP 1 449 746 B1**
(45) Veröffentlichungstag und Bekanntmachung des Hinweises auf die Patenterteilung: **12.09.2007**
(21) Anmeldenummer: 04003917.4
(22) Anmeldetag: 20.02.2004
(51) Int. Cl.: B62D 25/02, B62D 25/04, B62D 25/06

(54) **Kraftfahrzeugkarosserie mit Verstärkungsblech zwischen Dachspriegel, Säule und Seitenwand**
Motor vehicle body with a reinforcing sheet between the roof bow, column and sidewall
Carrosserie de véhicule automobile avec une bande de renforcement entre arc de toit, colonne et panneau latéral

(30) Priorität: 22.02.2003 DE 10307633
(43) Veröffentlichungstag der Anmeldung: 25.08.2004
(73) Patentinhaber: ADAM OPEL AG, 65423 Rüsselsheim (DE)
(72) Erfinder: Hedrich, Karl-Franz, 55291 Saulheim (DE); Lessmeister, Roland, 67697 Otterberg (DE); Schneider, Dirk, 65207 Wiesbaden-Naurod (DE)

(56) Entgegenhaltungen:
- EP-A- 1 036 728
- DE-A1- 10 011 946
- DE-A1- 19 638 156
- DE-U- 6 601 996
- PATENT ABSTRACTS OF JAPAN Bd. 2002, Nr. 02, 2. April 2002 (2002-04-02) -& JP 2001 294174 A (SUZUKI MOTOR CORP), 23. Oktober 2001 (2001-10-23)

## Beschreibung

Die Erfindung betrifft eine Kraftfahrzeugkarosserie mit einem Seitenteil und einem Dach, mit einer mittleren vertikalen Säule des Seitenteils, mit einem in dem Dach angeordneten und bis zu der Säule geführten Spriegel, mit einer inneren Seitenwand und einer äußeren Seitenwand des Seitenteils und mit einem in der Verbindung des Spriegels mit der Säule angeordneten Verstärkungsblech.

Eine solche Kraftfahrzeugkarosserie ist aus der DE 100 11 946 A1 bekannt. Das Verstärkungsblech verbindet in einer Ebene die Seitenwände des Seitenteils mit dem Spriegel. Das Verstärkungsblech hat im Wesentlichen eine der äußeren Seitenwand entsprechende Kontur und ist mit dieser und gleichzeitig mit dem Spriegel verschweißt. Eine einzelne, von der äußeren Seitenwand wegführende Eindrückung des Verstärkungsblechs dient dazu, eine Schweißverbindung mit der inneren Seitenwand und dem Spriegel zu erzeugen.

Nachteilig bei dieser Kraftfahrzeugkarosserie ist, dass bei einem Seitenaufprall des Kraftfahrzeuges trotz des Verstärkungsblechs die vertikale Säule in die Fahrgastzelle des Kraftfahrzeuges eingedrückt werden kann.

Der Erfindung liegt das Problem zugrunde, eine Kraftfahrzeugkarosserie der eingangs genannten Art so weiterzubilden, dass sie bei einem Seitenaufprall des Kraftfahrzeuges die vertikale Säule zuverlässig abstützt.

Dieses Problem wird erfindungsgemäß dadurch gelöst, dass das Verstärkungsblech mehrere, nebeneinander angeordnete und in Richtung des Spriegels weisende Sicken hat und dass die Sicken einen die Seitenwände überragenden Bereich aufweisen und in dem überragenden Bereich mit dem Spriegel verbunden sind.

Hierdurch sind die Befestigungen des Spriegels und der Seitenwände an dem Verstärkungsblech nicht mehr wie bei dem Stand der Technik in einer Ebene angeordnet. Bei einem Seitenaufprall des Kraftfahrzeuges werden in die vertikale Säule eingeleitete Kräfte dank der Erfindung zwangsläufig von dem Verstärkungsblech aufgenommen und in den Spriegel des Daches eingeleitet. Damit vermag das Verstärkungsblech die vertikale Säule an den Spriegel des Daches mit einer hohen Festigkeit anzubinden und das Eindringen der vertikalen Säule in die Fahrgastzelle des Kraftfahrzeuges zu verhindern. Durch die hohe Steifigkeit der Anbindung der vertikalen Säule an das Dach bilden der Spriegel und die vertikale Säule einen zumindest teilweise elastischen Bogen, welcher bei dem Seitenaufprall einen Pendeleffekt des unteren Endes der vertikalen Säule ermöglicht. Dies führt zu einer deutlichen Verringerung der Verletzungsgefahr eines Insassen des Kraftfahrzeuges im Kopf- und Rippenbereich. Weiterhin trägt die Versteifung der Anbindung der vertikalen Säule an das Dach zu einer Erhöhung der Sicherheit der Fahrzeuginsassenbei einem Überschlag des Kraftfahrzeuges.

Zur weiteren Erhöhung der Steifigkeit der Anbindung der vertikalen Säule an das Dach trägt es gemäß einer vorteilhaften Weiterbildung der Erfindung bei, wenn das Verstärkungsblech an der einer äußeren Dachhaut zugewandten Seite der inneren Seitenwand und an der der äußeren Dachhaut abgewandten Seite des Spriegels befestigt ist.

Zur weiteren Erhöhung der Steifigkeit der Anbindung der vertikalen Säule an das Dach trägt es gemäß einer anderen vorteilhaften Weiterbildung der Erfindung bei, wenn die Sicken im Querschnitt die Form eines Doppelhutprofils aufweisen und unmittelbar vor dem Ende des Spriegels wechselweise mit der inneren Seitenwand und mit der äußeren Seitenwand verbunden sind. Hierdurch weist die Anbindung der vertikalen Säule an das Dach im Querschnitt mehrere kastenförmige Elemente auf.

Der Spriegel lässt sich gemäß einer anderen vorteilhaften Weiterbildung der Erfindung mit einer Vielzahl von Schweißpunkten an dem Verstärkungsblech befestigen, wenn der Spriegel komplementär zu den Sicken des Verstärkungsblechs gestaltet ist.

Die Erfindung lässt verschiedene Ausführungsformen zu. Zur weiteren Verdeutlichung ihres Grundprinzips sind zwei davon in der Zeichnung dargestellt und werden nachfolgend beschrieben. Die Zeichnung zeigt in
- Fig. 1: eine Schnittdarstellung durch eine erfindungsgemäße Kraftfahrzeugkarosserie im Bereich einer mittleren Säule und eines Spriegels,
- Fig. 2: eine Schnittdarstellung durch die Kraftfahrzeugkarosserie aus Figur 1 entlang der Linie II - II,
- Fig. 3: eine Schnittdarstellung durch die Kraftfahrzeugkarosserie aus Figur 1 entlang der Linie III - III,
- Fig. 4: eine Schnittdarstellung durch eine weitere Ausführungsform der erfindungsgemäßen Kraftfahrzeugkarosserie.

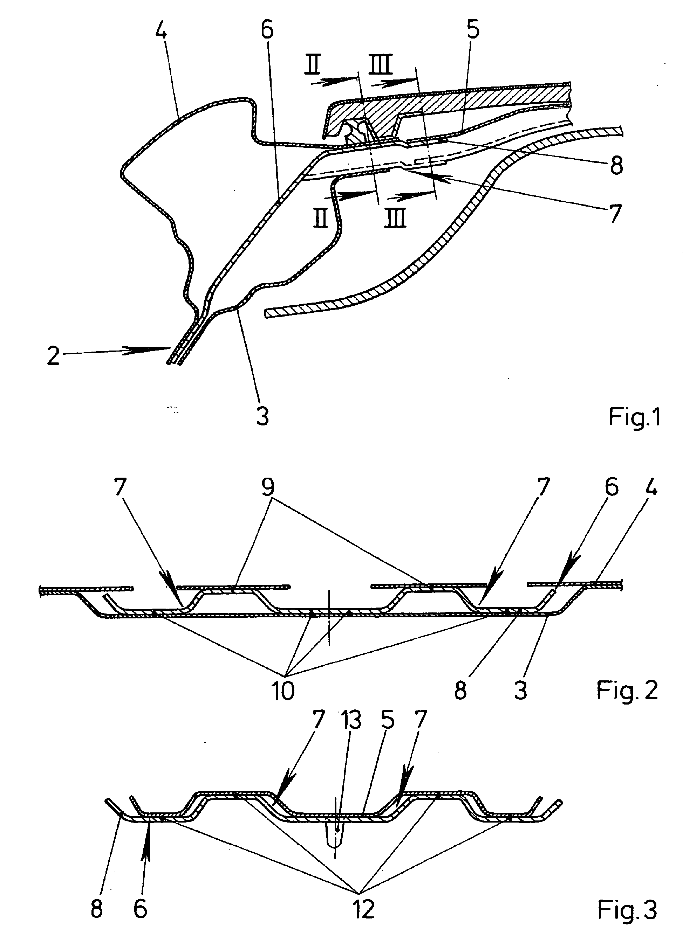

Figur 1 zeigt eine Schnittdarstellung durch eine Kraftfahrzeugkarosserie im Eckbereich eines Daches 1 und einer mittleren vertikalen Säule 2 eines Seitenteils. Diese Säule 2 wird häufig als B-Säule bezeichnet und wird von einer inneren Seitenwand 3 und einer äußeren Seitenwand 4 begrenzt. Das Dach 1 weist einen quer zur Fahrtrichtung des Kraftfahrzeuges angeordneten Spriegel 5 zu seiner Verstärkung auf. Weiterhin ist in dem Eckbereich ein Verstärkungsblech 6 angeordnet, welches mehrere Sicken 7 hat. Die innere Seitenwand 3 ist an der Unterseite der Sicken 7 befestigt, während die äußere Seitenwand 4 an der Oberseite der Sicken 7 anliegt. Ein die Seitenwände 3, 4 überragender Abschnitt des Verstärkungsblechs 6 ist mit dem Spriegel 5 verbunden. Im Bereich der vertikalen Säule 2 liegen die Seitenwände 3, 4 mit dem Verstärkungsblech 6 sandwichartig übereinander. Weiterhin zeigt Figur 1, dass der Spriegel 5 auf der einem Dachmodul 8 zugewandten Seite des Verstärkungsblechs 6 befestigt ist, während die innere Seitenwand 3 an der dem Dachmodul 8 abgewandten Seite des Verstärkungsblechs 6 anliegt.

Figur 2 zeigt in einer Schnittdarstellung durch die Kraftfahrzeugkarosserie aus Figur 1, dass das Verstärkungsblech 6 im Querschnitt ein Doppelhutprofil mit zwei nebeneinander angeordneten Sicken 7 aufweist und die Seitenwände 3, 4 auf Abstand hält. Die Seitenwände 3, 4 sind jeweils im Bereich der Sicken 7 eben gestaltet. Hierdurch ist das Verstärkungsblech 6 abwechselnd mit der inneren Seitenwand 3 und der äußeren Seitenwand 4 durch Schweißpunkte 9, 10 verbunden. Die äußere Seitenwand 4 hat in der Höhe der Schweißpunkte 10 des Verstärkungsblechs 6 mit der inneren Seitenwand 3 Ausnehmungen 11 zur Durchführung einer Schweißzange.

Figur 3 zeigt in einer Schnittdarstellung durch die Kraftfahrzeugkarosserie aus Figur 1 entlang der Linie III - III, dass der Spriegel 5 in seinem an das Verstärkungsblech 6 angrenzenden Bereich komplementär zu den Sicken 7 gestaltet ist. Zur Verbindung des Verstärkungsteils 6 mit dem Spriegel 5 sind mehrere Schweißpunkte 12 vorgesehen. Weiterhin zeigt Figur 3, dass das Verstärkungsblech 6 mit dem Spriegel 5 über eine Tabing-Lasche 13 verbunden ist.

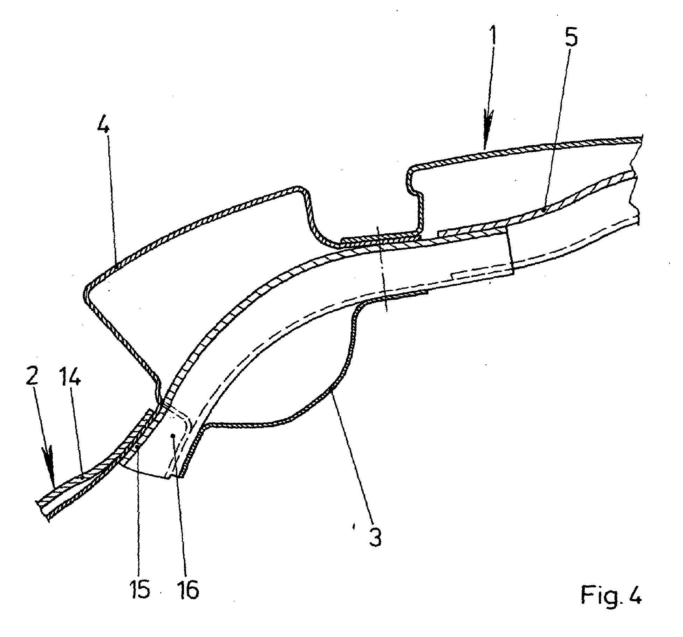

Figur 4 zeigt eine weitere Ausführungsform der Kraftfahrzeugkarosserie. Diese unterscheidet sich von der aus den Figuren 1 bis 3 nur dadurch, dass die vertikale Säule 2 eine außenseitige Verstärkung 14 hat und dass ein Verstärkungsblech 15 im Eckbereich der vertikalen Säule 2 und des Spriegels 5 über seine gesamte Länge durchgehende Sicken 16 aufweist. Hierdurch wird die innere Seitenwand 3 von der äußeren Seitenwand 4 an der vertikalen Säule 2 auf Abstand gehalten.

### Bezugszeichenliste

- 1: Dach
- 2: Säule
- 3, 4: Seitenwand
- 5: Spriegel
- 6: Verstärkungsblech
- 7: Sicke
- 8: Dachmodul
- 9, 10: Schweißpunkt
- 11: Ausnehmung
- 12: Schweißpunkt
- 13: Tabing-Lasche
- 14: Verstärkung
- 15: Verstärkungsblech
- 16: Sicke

## Patentansprüche

1. Kraftfahrzeugkarosserie mit einem Seitenteil und einem Dach, mit einer mittleren vertikalen Säule des Seitenteils, mit einem in dem Dach angeordneten und bis zu der Säule geführten Spriegel, mit einer inneren Seitenwand und einer äußeren Seitenwand des Seitenteils und mit einem in der Verbindung des Spriegels mit der Säule angeordneten Verstärkungsblech, **dadurch gekennzeichnet, dass** das Verstärkungsblech (6, 15) mehrere, nebeneinander angeordnete und in Richtung des Spriegels (5) weisende Sicken (7, 16) hat und dass die Sicken (7, 16) einen die Seitenwände (3, 4) überragenden Bereich aufweisen und in dem überragenden Bereich mit dem Spriegel (5) verbunden sind.

2. Kraftfahrzeugkarosserie nach Anspruch 1, **dadurch gekennzeichnet, dass** das Verstärkungsblech (6, 15) an der einer äußeren Dachhaut zugewandten Seite der inneren Seitenwand (3) und an der der äußeren Dachhaut abgewandten Seite des Spriegels (5) befestigt ist.

3. Kraftfahrzeugkarosserie nach Anspruch 1 oder 2, **dadurch gekennzeichnet, dass** die Sicken (7, 16) im Querschnitt die Form eines Doppelhutprofils aufweist und unmittelbar vor dem Ende des Spriegels (5) wechselweise mit der inneren Seitenwand (3) und mit der äußeren Seitenwand (4) verbunden sind.

4. Kraftfahrzeugkarosserie nach zumindest einem der vorhergehenden Ansprüche, **dadurch gekennzeichnet, dass** der Spriegel (5) komplementär zu den Sicken (7, 16) des Verstärkungsblechs (6, 15) gestaltet ist.

## Claims

1. Motor vehicle body with a side section and a roof, with a central vertical column of the side section, with a bow arranged in the roof and running as far as the column, with a inner side wall and an outer side wall of the side section and with a reinforcing sheet arranged in the connection of the bow with the column, **characterised in that** the reinforcing sheet (6, 15) has a plurality of crimps (7, 16) arranged adjacent to one another and pointing towards the bow (5), and that the crimps (7, 16) have a region projecting above the side walls (3, 4) and are connected to the bow (5) in the projecting region.

2. Motor vehicle body according to Claim 1, **characterised in that** the reinforcing sheet (6, 15) is fastened to the side of the inner side wall (3) facing an outer roof shell and to the side of the bow (5) remote from the outer roof shell.

3. Motor vehicle body according to Claim 1 or 2, **characterised in that** the crimps (7, 16) have the shape of a double hat section in cross-section and directly in front of the end of the bow (5) are alternately connected to the inner side wall (3) and to the outer side wall (4).

4. Motor vehicle body according to at least one of the preceding claims, **characterised in that** the bow (5) is configured complementary to the crimps (7, 16) of the reinforcing sheet (6, 15).

## Revendications

1. Carrosserie de véhicule automobile, comportant :une partie latérale et un toit ; un montant vertical central de la partie latérale ; un arceau disposé dans le toit et guidé jusqu'au montant ; une paroi latérale intérieure et une paroi latérale extérieure de la partie latérale et une tôle de renforcement disposée dans la liaison de l'arceau au montant, **caractérisée en ce que** la tôle de renforcement (6, 15) présente plusieurs moulures (7, 16) disposées les unes à côté des autres et orientées dans la direction de l'arceau (5), et **en ce que** les moulures (7, 16) présentent une zone dépassant des parois latérales (3, 4) et sont reliées à l'arceau (5) dans la zone en dépassement.

2. Carrosserie de véhicule automobile selon la revendication 1, **caractérisée en ce que** la tôle de renforcement (6, 15) est fixée sur la face, tournée vers une peau de toit extérieure, de la paroi latérale intérieure (3) et est fixée sur la face, opposée à la peau de toit extérieure, de l'arceau (5).

3. Carrosserie de véhicule automobile selon la revendication 1 ou 2, **caractérisée en ce que** les moulures (7, 16) présentent c section transversale la forme d'un profil en chapeau double et sont reliées directement, avant l'extrémité de l'arceau (5), alternativement à la paroi latérale intérieure (3) et à la paroi latérale extérieure (4).

4. Carrosserie de véhicule automobile selon au moins l'une des revendications précédentes, **caractérisée en ce que** l'arceau (5) est configuré de façon complémentaire aux moulures (7, 16) de la tôle de renforcement (6, 15).
